# EUROPÄISCHE PATENTANMELDUNG

(11) **EP 4 141 649 A1**
(43) Veröffentlichungstag der Anmeldung: **01.03.2023**
(21) Anmeldenummer: 21192959.1
(22) Anmeldetag: 25.08.2021
(51) Int. Cl.: G06F 8/65, H04W 4/70, H04W 4/50, H04W 4/06, H04L 9/32

(54) **VERFAHREN ZUM BEREITSTELLEN EINER AKTUALISIERUNG EINES COMPUTERPROGRAMMS AN KOMPONENTEN EINES NETZWERKS UND NETZWERK**

(71) Anmelder: Siemens Aktiengesellschaft, 80333 München (DE)
(72) Erfinder: Nickles, Jochen, 90763 Fürth (DE); Sauer, Markus Dr., 81739 München (DE)

(57) **Zusammenfassung**

Bei dem Verfahren zum Bereitstellen einer Aktualisierung eines Computerprogramms an je eine einer Vielzahl von Komponenten eines Netzwerks werden, insbesondere mittels einer Punktzu-Punkt-Verbindung mit jeder der Komponenten, jeweils Übertragungsbedingungen zum Bereitstellen übermittelt und es wird mehreren, vorzugsweise sämtlichen, der Komponenten die Aktualisierung mittels eines Multicast- und/oder Broadcast-Verfahrens bereitgestellt.

Das Netzwerk ist ausgebildet zum Bereitstellen einer Aktualisierung eines Computerprogramms an eine Vielzahl von Komponenten des Netzwerks und weist eine Administrationskomponente zum Übermitteln von Übertragungsbedingungen mittels Punkt-zu-Punkt-Verbindungen mit den Komponenten sowie eine Sendekomponente zum Bereitstellen einer Aktualisierung mittels eines Multicast- und/oder Broadcast-Verfahrens an mehrere, vorzugsweise sämtliche, der Komponenten auf.

Das Automatisierungssystem weist ein solches Netzwerk auf.

## Beschreibung

Die Erfindung betrifft ein Verfahren zum Bereitstellen einer Aktualisierung eines Computerprogramms an je eine einer Vielzahl von Komponenten eines Netzwerks sowie ein Netzwerk.

Durch die fortschreitende Entwicklung des Industriellen Internets-der-Dinge, auch als "Industrial Internet of Things" (IIoT) bezeichnet, werden Millionen von vernetzten industriellen Geräten eingesetzt, die regelmäßig durch ihre Hersteller, ihre Besitzer oder ihre Betreiber überwacht werden müssen. Infolge ihrer Netzwerkfähigkeit können die industriellen Geräte mit anderen Geräten und Diensteanbietern interagieren. Somit muss auf diese Geräte notwendigerweise von extern, sowohl gewollt als auch ungewollt, zugegriffen werden können. Die Geräte bilden daher naturgemäß offene Systeme, die über ihren gesamten Lebenszyklus gewartet werden müssen. Insbesondere obliegt Herstellern und Betreibern dieser Geräte regelmäßig eine Verantwortung für die Sicherheit und die Aktualität dieser Geräte.

Daher weisen solche vernetzten Geräte regelmäßig die Fähigkeit auf, Aktualisierungen vorzunehmen. Aktualisierungen betreffen beispielsweise eine Konfiguration und/oder eine Firmware und/oder eine Software und/oder Daten der Geräte. Dazu weisen die Geräte funktionale Software-Komponenten auf, welche mittels passenden Management-Werkzeugen angesprochen werden können, um Softwareaktualisierungen vorzunehmen, insbesondere um Software durch aktualisierte Software auszutauschen.

Solche Management-Werkzeuge werden regelmäßig durch ein Management-System bereitgestellt, welches sich jeweils mit den Geräten verbindet und die Aktualisierung vornimmt. Folglich müssen sich bei einer entsprechenden Anzahl von zu aktualisierenden Geräten, also von Geräten, deren Software zu aktualisieren ist, Management-Systeme entsprechend häufig mit diesen Geräten verbinden. Dabei werden häufig identische Softwareaktualisierungen mehrfach von einem Management-System an verschiedene Geräte übertragen. Damit geht ein hoher Aufwand an Übertragungsvorgängen einher, welche jeweils individuell administriert werden müssen. Zugleich wird für solche Aktualisierungen viel Bandbreite benötigt. Insbesondere im Zuge des "Industrial Internet of Things" (IIoT) wächst die Anzahl an aktuell zu haltenden Geräten rasant an. Das Management von Aktualisierungen von solchen Geräten wird daher zunehmend aufwendig und teuer.

Es ist daher die Aufgabe der Erfindung, ein verbessertes Verfahren zum Bereitstellen einer Aktualisierung eines Computerprogramms an je eine einer Vielzahl von Komponenten eines Netzwerks anzugeben, welches insbesondere mit verringertem Aufwand und verringerten Kosten ausführbar ist. Zudem ist es Aufgabe der Erfindung, ein verbessertes Netzwerk anzugeben, bei welchem in das Netzwerk eingebundenen Geräten insbesondere auf einfachere Weise als bislang bekannt eine Aktualisierung eines Computerprogramms bereitgestellt werden können.

Diese Aufgabe der Erfindung wird mit einem Verfahren mit den in Anspruch 1 angegebenen Merkmalen sowie mit einem Netzwerk mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Bereitstellen einer Aktualisierung eines Computerprogramms an eine einer Vielzahl von Komponenten eines Netzwerks werden, insbesondere mittels einer Punkt-zu-Punkt-Verbindung mit jeder der Komponenten, jeweils Übertragungsbedingungen zum Übermitteln der Aktualisierung übermittelt und mehreren, vorzugsweise sämtlichen, der Komponenten wird die Aktualisierung mittels eines Multicast- und/oder Broadcast-Verfahrens entsprechend den Übertragungsbedingungen bereitgestellt.

Bei dem erfindungsgemäßen Verfahren wird zwischen der Übermittlung der Übertragungsbedingungen und der Bereitstellung der Aktualisierung getrennt, das heißt, es werden zwei unterschiedliche Kommunikationswege herangezogen, um einerseits die Übertragungsbedingungen zur Übertragung der Aktualisierung zu übermitteln und um andererseits die Aktualisierung selbst zu übermitteln, d. h. bereitzustellen. Durch die Nutzung eines Multicast- und/oder Broadcast-Verfahrens kann vorteilhaft ein Verfahren genutzt werden, welches zur Übertragung der Aktualisierung nicht notwendigerweise Punkt-zu-Punkt-Verbindungen unterhalten muss. Stattdessen kann, ähnlich einer Rundfunkübertragung, die Aktualisierung an einer Vielzahl von Komponenten gleichzeitig übersandt werden. Auf diese Weise müssen zur Übertragung der Aktualisierung selbst keine Punkt-zu-Punkt-Verbindungen administriert und verwaltet werden. Die Übertragung der Aktualisierung an die Vielzahl von Komponenten kann folglich ohne aufwendiges Management in der Art einer Ausstrahlung erfolgen. Vorteilhafterweise können mittels des Multicast- und/oder Broadcast-Verfahrens grundsätzlich beliebig viele Geräte mit Aktualisierungen versorgt werden, ohne dass eine Vielzahl von Verbindungen für die Aktualisierung koordiniert werden muss. Dabei ist es nicht einmal erforderlich, dass eine Anzahl derjenigen Geräte, welche die Aktualisierung erhalten sollen, im Vorhinein feststeht. Allein das vorherige Übermitteln der Übertragungsbedingungen kann mittels Punkt-zu-Punkt-Verbindungen erfolgen, wobei diese Punkt-zu-Punkt-Verbindungen nur ein geringes Datenvolumen übertragen. Erfindungsgemäß kann folglich der Aufwand zur Einrichtung dieser Punkt-zu-Punkt-Verbindungen sehr einfach gehalten werden. Das Datenvolumen über solche Punkt-zu-Punkt-Verbindungen ist dabei begrenzt.

Bei dem erfindungsgemäßen Verfahren umfasst das Multicast- und/oder Broadcast-Verfahren ein LTE-Verfahren und/oder ein 5G-Verfahren und/oder ein 6G-Verfahren. Mittels LTE-Verfahren und/oder 5G-Verfahren und/oder 6G-Verfahren bestehen etablierte Protokolle zur Einrichtung von Multicast- und/oder Broadcast-Verfahren. Diese können mit hinreichend großem Datenvolumen eingesetzt werden, um Komponenten von Netzwerken mit Aktualisierungen zu versehen.

In einer bevorzugten Weiterbildung des erfindungsgemäßen Verfahrens umfassen die Übertragungsbedingungen jeweils eine Berechtigung der jeweiligen Komponente, wobei die Aktualisierung den Komponenten mit der Berechtigung bereitgestellt wird. Auf diese Weise können beim Übermitteln der Übertragungsbedingungen die Berechtigungen der Komponenten festgelegt werden und die Aktualisierung wird im Anschluss nun denjenigen Komponenten übermittelt, d. h. bereitgestellt, welche diese Berechtigung aufweisen. Dies kann mittels einer Verschlüsselung erfolgen, wobei die Entschlüsselung der Aktualisierung mittels eines Schlüssels erfolgen muss, welcher bei der Übermittlung der Übertragungsbedingungen übermittelt wird. Auf diese Weise kann sichergestellt werden, dass die Aktualisierungen mittels des Multicast- und/oder Broadcast-Verfahrens nur Komponenten mit einer Berechtigung übermittelt werden.

In einer vorteilhaften Weiterbildung des erfindungsgemäßen Verfahrens wird die Berechtigung der Komponenten mittels eines kryptographischen Verfahrens, insbesondere mittels einer digitalen Signatur und/oder eines kryptographischen Zertifikats, geprüft. Auf diese Weise kann vor einer Übermittlung der Aktualisierung festgestellt werden, ob die jeweilige Komponente tatsächlich zum Erhalt der Aktualisierung berechtigt ist.

Geeigneterweise umfassen bei dem erfindungsgemäßen Verfahren die Übertragungsbedingungen eine Information über einen Übertragungskanal. So können die Komponenten in dem Fall, dass mehrere Übertragungskanäle für die Bereitstellung der Aktualisierung zur Verfügung stehen, einen bestimmten Übertragungskanal, der mit den Übertragungsbedingungen übermittelt worden ist, nutzen und über diesen Übertragungskanal die Aktualisierung erhalten.

Vorzugsweise enthalten bei dem erfindungsgemäßen Verfahren die Übertragungsbedingungen eine Information über eine Übertragungszeit und/oder über einen Übertragungszeitraum für die Übertragung der Aktualisierung. Auf diese Weise können die Komponenten die Übertragungszeit und/oder den Übertragungszeitraum speichern und die Aktualisierung zu dieser Übertragungszeit und/oder dem Übertragungszeitraum empfangen.

Zweckmäßig enthalten die Übertragungsbedingungen eine Identifikation der Aktualisierung. Eine solche Identifikation der Aktualisierung kann insbesondere ein Name der Aktualisierung und/oder eine Versionsnummer der Aktualisierung sein. Auf diese Weise wird sichergestellt, dass der Komponente die zutreffende Aktualisierung bereitgestellt wird und nicht versehentlich eine nicht für die Komponente vorgesehene Aktualisierung bereitgestellt wird.

In einer bevorzugten Weiterbildung des erfindungsgemäßen Verfahrens umfasst die Identifikation der Aktualisierung eine kryptographische Verifikation der Aktualisierung, insbesondere einen Hashwert. Auf diese Weise kann der Komponente die kryptographische Verifikation der Aktualisierung, insbesondere der Hashwert, vorab mitgeteilt werden, sodass die Komponente, nach Erhalt der übermittelten Aktualisierung, die Aktualisierung anhand der kryptographischen Verifikation, insbesondere anhand des Hashwerts, prüfen kann. Auf diese Weise ist sichergestellt, dass der Komponente die vorgesehene und unveränderte Aktualisierung bereitgestellt wird und nicht etwa eine mit Schadsoftware versehene Aktualisierung.

In einer bevorzugten Weiterbildung des erfindungsgemäßen Verfahrens ist das Netzwerk ein Internet-der-Dinge-Netzwerk und/oder ein Netzwerk eines Automatisierungssystems, insbesondere einer Fertigungsanlage.

Das erfindungsgemäße Netzwerk ist ausgebildet zum Bereitstellen einer Aktualisierung eines Computerprogramms an eine Vielzahl von Komponenten des Netzwerks, welches eine Administrationskomponente zum Übermitteln von Übertragungsbedingungen mittels Punkt-zu-Punkt-Verbindung mit den Komponenten sowie eine Sendekomponente zum Bereitstellen einer Aktualisierung mittels eines Multicast- und/oder Broadcast-Verfahrens an mehrere, vorzugsweise sämtliche, der Komponenten aufweist.

Mittels der Administrationskomponente ist das Netzwerk zum Übermitteln von Übertragungsbedingungen an die Komponenten ausgebildet. Mittels der Sendekomponente kann das Netzwerk eine Übermittlung einer Aktualisierung mittels eines Multicast- und/oder Broadcast-Verfahrens an die Komponenten erfolgen. Folglich ist das Netzwerk zur Ausführung des erfindungsgemäßen Verfahrens wie vorhergehend beschrieben ausgebildet.

In einer bevorzugten Weiterbildung der Erfindung ist das Netzwerk ein Internet-der-Dinge-Netzwerk und/oder ein Netzwerk eines Automatisierungssystems und/oder einer Fertigungsanlage.

Das erfindungsgemäße Automatisierungssystem weist ein erfindungsgemäßes Netzwerk wie vorhergehend beschrieben auf.

Nachfolgend wird die Erfindung anhand eines in der Zeichnung dargestellten Ausführungsbeispiels näher erläutert. Es zeigen:
- Fig. 1: ein erfindungsgemäßes Automatisierungssystem bei der Durchführung des erfindungsgemäßen Verfahrens zur Bereitstellung einer Aktualisierung einer Software an Geräte des Automatisierungssystems schematisch in einer Prinzipskizze sowie
- Fig. 2: den Ablauf des erfindungsgemäßen Verfahren zur Bereitstellung der Aktualisierung schematisch in einem Blockdiagramm.

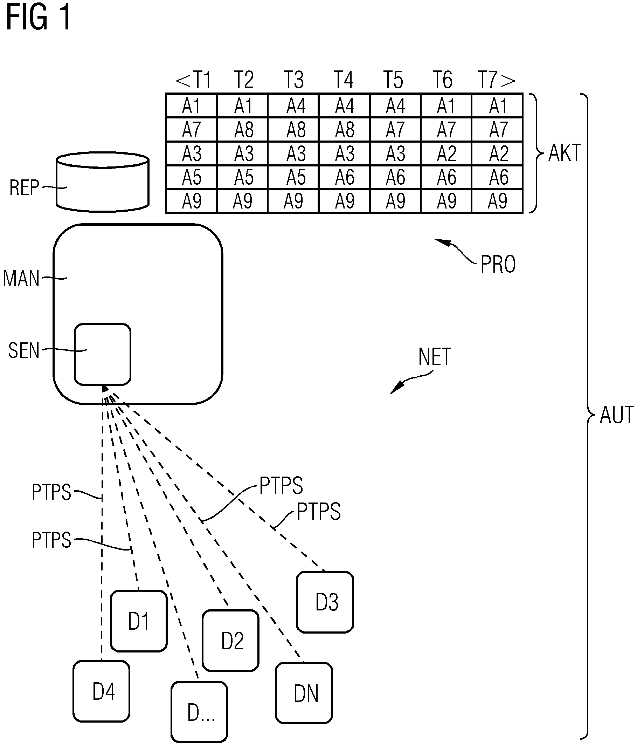

Das in Fig. 1 dargestellten Automatisierungssystem AUT weist ein industrielles Netzwerk NET in Gestalt eines industriellen Internet-der-Dinge-Netzwerks auf. Das Netzwerk NET umfasst Komponenten in Form von Industriegeräten D1, D2, D3, D4, D..., DN. Beispielsweise ist das Automatisierungssystem AUT eine Fertigungsanlage und die Industriegeräte D1, D2, D3, D4, D..., DN sind beispielsweise digital steuerbare Fertigungswerkzeuge und Werkzeugsensoren zur Überwachung der Werkzeuge und der Betriebsbedingungen der Werkzeuge. Zudem umfasst das Automatisierungssystem AUT Werkstücksensoren zur Qualitätsprüfung von mittels der Fertigungsanlage gefertigten Werkstücken.

Die Industriegeräte D1, D2, D3, D4, D..., DN des Automatisierungssystems AUT benötigen nach einer gewissen Zeit Aktualisierungen AKT in Form von Softwareaktualisierungen. Diese Aktualisierungen AKT dienen zur Aktualisierung einer Konfiguration und/oder einer Firmware und/oder einer Software, beispielsweise einer Anwendungssoftware oder eines Betriebssystems, oder von sonstigen Daten, welche im dargestellten Ausführungsbeispiel ebenfalls eine Software bilden.

Dazu müssen die Aktualisierungen AKT an die Industriegeräte D1, D2, D3, D4, D..., DN transferiert werden. Um diesen Transfer der Aktualisierungen AKT effizient zu gestalten, wird bei dem erfindungsgemäßen Verfahren zur Bereitstellung einer Aktualisierung zu jedem der Industriegeräte D1, D2, D3, D4, D..., DN eine Koordinationsverbindung sowie eine davon verschiedene Downloadverbindung bereitstellt.

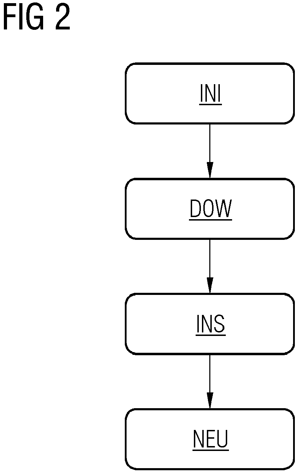

Dazu wird zunächst in einem ersten Initialisierungsschritt INI (s. a. Fig. 2) zwischen einem Managementsystem MAN und jedem der Industriegeräten D1, D2, D3, D4, D..., DN jeweils eine Punkt-zu-Punkt-Verbindung PTPS mittels eines Peer-to-Peer-Services aufgebaut. Das Managementsystem MAN ist mittels eines Servers realisiert, welcher eingerichtet ist, das Netzwerk NET des Automatisierungssystems AUT zu administrieren und zu koordinieren.

In dem Initialisierungsschritt INI wird mittels der Punkt-zu-Punkt-Verbindung PTPS das jeweils mit dem Managementsystem MAN verbundene Industriegerät D1, D2, D3, D4, D..., DN durch eine digitale Signatur des Industriegeräts D1, D2, D3, D4, D..., DN identifiziert und autorisiert. Dazu hält das Industriegerät D1, D2, D3, D4, D..., DN ein digitales Industriegerätezertifikat zur Erstellung einer digitalen Signatur bereit. Als weitere Sicherheitsmaßnahme identifiziert und autorisiert sich zudem das Managementsystem MAN bei den Industriegerät D1, D2, D3, D4, D..., DN. Das Managementsystem MAN hält dazu ein Managementsystemzertifikat zur Erstellung einer digitalen Signatur bereit.

Zusätzlich teilt das Managementsystem MAN dem jeweiligen Industriegerät D1, D2, D3, D4, D..., DN mittels der Punkt-zu-Punkt-Verbindung PTPS ein Identifikationsdatum der bereitzustellenden Aktualisierung, d. h. eines die Aktualisierung AKT enthaltenden Datenpakets, im dargestellten Ausführungsbeispiel eines Patches oder einer aktualisierten Version der zu aktualisierenden Software, mit. Beispielsweise ist das Identifikationsdatum eine Versionsnummer oder eine Patch-Bezeichnung. Zusätzlich teilt das Managementsystem MAN dem jeweiligen Industriegerät D1, D2, D3, D4, D..., DN mittels der Punkt-zu-Punkt-Verbindung PTPS eine Übertragungszeit für die Übertragung der Aktualisierung AKT mit, beispielsweise in Form einer Startzeit für die Übertragung oder eines Zeitintervalls für die Übertragung. Weiterhin teilt das Management-system MAN dem jeweiligen Industriegerät D1, D2, D3, D4, D..., DN mittels der Punkt-zu-Punkt-Verbindung PTPS einen Übertragungskanal zur Übertragung der Aktualisierung AKT mit. Zusätzlich übermittelt das Managementsystem MAN mittels der Punkt-zu-Punkt-Verbindung PTPS einen Hashwert der jeweiligen Aktualisierung AKT.

Nachfolgend aktiviert das Managementsystem MAN mittels der Punkt-zu-Punkt-Verbindung PTPS einen Downloadmodus des Industriegeräts D1, D2, D3, D4, D..., DN, in welchem das Industriegerät D1, D2, D3, D4, D..., DN einen Download der Aktualisierung AKT über den zuvor spezifizierten Übertragungskanal erhält.

Der Download der Aktualisierung AKT selbst erfolgt dabei nicht mittels der Punkt-zu-Punkt-Verbindung PTPS, sondern in einem Downloadschritt DOW (s. a. Fig. 2) mittels eines Sendeprotokolls SEN in Form eines Broad- und/oder Multicast-Protokolls. In diesem Sendeprotokoll SEN sendet das Managementsystem MAN ein Repositorium REP von Aktualisierungen AKT, die im vorliegenden Ausführungsbeispiel eine oder mehrere der aktualisierten Versionen A1, A2, A3, A4, A5, A6, A7, A8, A9 der zu aktualisierenden Software umfassen, zu bestimmten Zeiten an sämtliche Industriegeräte D1, D2, D3, D4, D..., DN des Netzwerks NET des Automatisierungssystems. Befindet sich das jeweilige Industriegerät D1, D2, D3, D4, D..., DN im Downloadmodus, so kann das jeweilige Industriegerät D1, D2, D3, D4, D..., DN die für das jeweilige Industriegerät D1, D2, D3, D4, D..., DN vorgesehene Version A1, A2, A3, A4, A5, A6, A7, A8, A9 empfangen und mittels des Identifikationsdatums identifizieren sowie in einem dafür vorgesehenen Aktualisierungsspeicher des Industriegeräts D1, D2, D3, D4, D..., DN speichern. Dabei können mehrere Aktualisierungen AKT auch wiederholt gesendet werden, etwa in regelmäßigen oder vordefinierten zeitlichen Abständen.

Das Broad- und/oder Multicast-Protokoll des Sendeprotokolls SEN ist im dargestellten Ausführungsbeispiel mittels eines Mobilfunkübertragungsverfahrens realisiert, beispielsweise mittels LTE, 5G oder 6G.

Das Managementsystem MAN fungiert bei der Übertragung der Aktualisierungen AKT als Sendestation, welches ein mit dem Repositorium REP gebildetes Rundfunkprogramm an Rundfunkempfänger, hier die Industriegeräte D1, D2, D3, D4, D..., DN, sendet.

In weiteren, nicht eigens dargestellten Ausführungsbeispielen können die Industriegeräte D1, D2, D3, D4, D..., DN auch als sogenannte smarte Industriegeräte D1, D2, D3, D4, D..., DN mit selbstverwaltenden oder selbstorganisierenden Fähigkeiten ausgebildet sein. Diese müssen nicht mittels eines Managementsystems MAN verwaltet werden, sondern versetzen sich selbst in einen Downloadmodus, sobald sie erkennen, dass Aktualisierungen AKT verfügbar sind.

Nachdem die Industriegeräte D1, D2, D3, D4, D..., DN ihre Aktualisierungen AKT empfangen haben, schließen sie jeweils den Übertragungskanal, beenden den Downloadmodus und überprüfen den Hashwert der jeweiligen Aktualisierung AKT.

Nach erfolgter Übertragung wird die Aktualisierung AKT durch das Industriegerät D1, D2, D3, D4, D..., DN auf diesem Industriegerät D1, D2, D3, D4, D..., DN in einem Installationsschritt INS installiert (s. a. Fig. 2). Nach dem Installationsschritt INS startet sich das Industriegerät D1, D2, D3, D4, D..., DN in einem Neustartschritt NEU neu. Das Managementsystem MAN überwacht die Durchführung des Installationsschritts INS sowie den Neustartschritt NEU (s. a. Fig. 2).

## Patentansprüche

1. Verfahren zum Bereitstellen einer Aktualisierung (AKT) eines Computerprogramms an je eine einer Vielzahl von Komponenten (D1, D2, D3, D4, D5, D6) eines Netzwerks (NET), bei welchem, insbesondere mittels einer Punkt-zu-Punkt-Verbindung (PTPS) mit jeder der Komponenten, jeweils Übertragungsbedingungen zum Bereitstellen übermittelt (INI) werden und mehreren, vorzugsweise sämtlichen, der Komponenten (D1, D2, D3, D4, D5, D6) die Aktualisierung (AKT) mittels eines Multicast- und/oder Broadcast-Verfahrens (SEN) entsprechend den Übertragungsbedingungen bereitgestellt (DOW) wird.

2. Verfahren nach dem vorhergehenden Anspruch, bei welchem das Multicast- und/oder Broadcast-Verfahren (SEN) ein LTE-Verfahren und/oder ein 5G-Verfahren und/oder ein 6G-Verfahren umfasst.

3. Verfahren nach einem der vorhergehenden Ansprüche, bei welchem die Übertragungsbedingungen eine Berechtigung der Komponente (D1, D2, D3, D4, D5, D6) umfassen, wobei die Aktualisierung (AKT) den Komponenten (D1, D2, D3, D4, D5, D6) mit einer Berechtigung übermittelt wird.

4. Verfahren nach einem der vorhergehenden Ansprüche, bei welchem die Berechtigung der Komponente (D1, D2, D3, D4, D5, D6) mittels eines kryptographischen Verfahrens, insbesondere mittels einer digitalen Signatur und/oder eines kryptographischen Zertifikats, geprüft wird.

5. Verfahren nach einem der vorhergehenden Ansprüche, bei welchem die Übertragungsbedingungen eine Information über einen Übertragungskanal (PRO) umfassen.

6. Verfahren nach einem der vorhergehenden Ansprüche, bei welchem die Übertragungsbedingungen eine Information über eine Übertragungszeit (T1, T2, T3, T4, T5, T6, T7) und/oder einen Übertragungszeitraum umfassen.

7. Verfahren nach einem der vorhergehenden Ansprüche, bei welchem die Übertragungsbedingungen eine Identifikation der Aktualisierung (AKT) enthalten.

8. Verfahren nach einem der vorhergehenden Ansprüche, bei welchem die Identifikation eine kryptographische Verifikation der Aktualisierung (AKT), insbesondere einen Hashwert, umfasst.

9. Verfahren nach einem der vorhergehenden Ansprüche, bei welchem das Netzwerk (NET) ein Internet-der-Dinge-Netzwerk und/oder ein Netzwerk eines Automatisierungssystems (AUT) ist.

10. Netzwerk, ausgebildet zum Bereitstellen einer Aktualisierung (AKT) eines Computerprogramms an eine Vielzahl von Komponenten (D1, D2, D3, D4, D5, D6) des Netzwerks (NET), welches eine Administrationskomponente (MAN) zum Übermitteln (PTPS) von Übertragungsbedingungen mittels Punkt-zu-Punkt-Verbindungen mit den Komponenten (D1, D2, D3, D4, D5, D6) sowie eine Sendekomponente (MAN) zum Bereitstellen einer Aktualisierung (AKT) mittels eines Multicast- und/oder Broadcast-Verfahrens (SEN) an mehrere, vorzugsweise sämtliche, der Komponenten (D1, D2, D3, D4, D5, D6) aufweist.

11. Netzwerk nach dem vorhergehenden Anspruch, welches ein Internet-der-Dinge-Netzwerk und/oder ein Netzwerk (NET) eines Automatisierungssystems (AUT) und/oder einer Fertigungsanlage ist.

12. Automatisierungssystem mit einem Netzwerk (NET) nach den vorhergehenden Ansprüchen.
